# EUROPEAN PATENT APPLICATION

(11) **EP 2 879 098 A1**
(43) Date of publication of application: **03.06.2015**
(21) Application number: 13822585.9
(22) Date of filing: 08.03.2013
(51) Int. Cl.: G06T 19/00, H04N 13/02, H04N 13/04

(54) **THREE-DIMENSIONAL ENVIRONMENT SHARING SYSTEM, AND THREE-DIMENSIONAL ENVIRONMENT SHARING METHOD**

(30) Priority: 27.07.2012 JP 2012167102
(71) Applicant: NEC Solution Innovators, Ltd., Tokyo 136-8627 (JP)
(72) Inventor: MORISHITA, Koji, Koto-ku, Tokyo 1368627 (JP); NAGAI, Katsuyuki, Koto-ku, Tokyo 1368627 (JP); NODA, Hisashi, Koto-ku, Tokyo 1368627 (JP)
(74) Representative: MacDougall, Alan John Shaw
(86) International application number: PCT/JP2013/001519
(87) International publication number: WO 2014/016986

(57) **Abstract**

A first image processing device includes a first image acquisition unit that acquires a first captured image from a first imaging unit, a detection unit that detects a known common real object from the first captured image, a setting unit that sets a three-dimensional coordinate space on the basis of the common real object, and a transmission unit that transmits three-dimensional position information of the three-dimensional coordinate space to a second image processing device, and a second image processing device includes an acquisition unit that acquires a second captured image from a second imaging unit, a detection unit that detects the known common real object from the second captured image, a setting unit that sets the same three-dimensional coordinate space as the three-dimensional coordinate space set by the first image processing device on the basis of the common real object, a reception unit that receives the three-dimensional position information from the first image processing device, and a processing unit that processes virtual three-dimensional object data to be synthesized with the second captured image by using the three-dimensional position information.

## Description

### TECHNICAL FIELD

The present invention relates to a technique of realizing a three-dimensional environment on a computer.

### BACKGROUND ART

In recent years, a technique of realizing a three-dimensional environment on a computer, such as three-dimensional computer graphics (3DCG) or augmented reality (AR), has been actively put into practical use. In the AR technique, a virtual object or data is displayed so as to be superimposed on an object in the real world which is obtained through a camera of a portable apparatus such as a smart phone or a head mounted display (HMD). A user can visually recognize a three-dimensional image by using such a display technique.

The following Patent Document 1 proposes a technique in which a user is identified and tracked within a scene by using a depth sensing camera, and avatar animation for simulating a movement of the user is displayed within the scene according to a result thereof. In addition, the following Patent Document 2 proposes a technique which provides a computer interaction experience to a user in a natural three-dimensional environment without the need for additional equipment such as an arm cover or a glove. In this proposal, a depth camera is installed at a position opposing a user, and an image into which a virtual object is inserted along with the user captured by the depth camera is displayed, and interaction between the user and the virtual object is detected.

### RELATED DOCUMENT

### PATENT DOCUMENT

[Patent Document 1] PCT Japanese Translation Patent Publication No. 2011-515736
[Patent Document 2] Japanese Patent No. 4271236

### SUMMARY OF THE INVENTION

### PROBLEM TO BE SOLVED BY THE INVENTION

However, the method proposed in each of the above Patent Documents merely realizes a three-dimensional environment on a computer by using a captured image obtained by a single imaging device, and using a plurality of captured images obtained by a plurality of imaging devices are not taken into consideration at all.

The present invention has been made in consideration of the above-described circumstances and provides a technique of sharing a single three-dimensional environment between a plurality of image processing devices which process respective captured images obtained at different positions and from different directions.

In each aspect of the present invention, the following configurations are employed in order to solve the above-described problems.

A first aspect relates to a three-dimensional environment sharing system including a first image processing device and a second image processing device. The first image processing device includes a first image acquisition unit that acquires a first captured image from a first imaging unit; a first object detection unit that detects a known common real object from the first captured image acquired by the first image acquisition unit; a first coordinate setting unit that sets a three-dimensional coordinate space on the basis of the common real object detected by the first object detection unit; and a transmission unit that transmits three-dimensional position information of the three-dimensional coordinate space to the second image processing device. The second image processing device includes a second image acquisition unit that acquires a second captured image from a second imaging unit which is disposed at a position and in a direction different from a position and a direction of the first imaging unit and of which an imaging region overlaps at least part of an imaging region of the first imaging unit; a second object detection unit that detects the known common real object from the second captured image acquired by the second image acquisition unit; a second coordinate setting unit that sets the same three-dimensional coordinate space as the three-dimensional coordinate space set by the first image processing device on the basis of the common real object detected by the second object detection unit; a reception unit that receives the three-dimensional position information from the first image processing device; and an object processing unit that processes virtual three-dimensional object data to be synthesized with the second captured image by using the three-dimensional position information received by the reception unit.

A second aspect of the present invention relates to a three-dimensional environment sharing method performed by a first image processing device and a second image processing device. The three-dimensional environment sharing method includes causing the first image processing device to acquire a first captured image from a first imaging unit; detect a known common real object from the acquired first captured image; set a three-dimensional coordinate space on the basis of the detected common real object; and transmit three-dimensional position information of the three-dimensional coordinate space to the second image processing device, and causing the second image processing device to acquire a second captured image from a second imaging unit which is disposed at a position and in a direction different from a position and a direction of the first imaging unit and of which an imaging region overlaps at least part of an imaging region of the first imaging unit; detect the known common real object from the acquired second captured image; set the same three-dimensional coordinate space as the three-dimensional coordinate space set by the first image processing device on the basis of the detected common real object; receive the three-dimensional position information from the first image processing device; and process virtual three-dimensional object data to be synthesized with the second captured image by using the received three-dimensional position information.

In addition, according to other aspects of the present invention, there may be provided a program causing each computer to realize each configuration included in the first aspect, and there may be provided a computer readable recording medium recording the program thereon. The recording medium includes a non-transitory tangible medium.

According to each aspect, it is possible to provide a technique of sharing a single three-dimensional environment between a plurality of image processing devices which process respective captured images obtained at different positions and from different directions.

### BRIEF DESCRIPTION OF THE DRAWINGS

The above-described object, and other objects, features and advantages will be further apparent through preferred exemplary embodiments described below and accompanying drawings.

FIG. 1 is a diagram conceptually illustrating a hardware configuration example of a three-dimensional environment sharing system in a first exemplary embodiment.
FIG. 2 is a diagram illustrating an example of a form of using the three-dimensional environment sharing system in the first exemplary embodiment.
FIG. 3 is a diagram illustrating an example of an exterior configuration of an HMD.
FIG. 4 is a diagram conceptually illustrating a process configuration example of a sensor side device in the first exemplary embodiment.
FIG. 5 is a diagram conceptually illustrating a process configuration example of a display side device in the first exemplary embodiment.
FIG. 6 is a diagram illustrating an example of a synthesized image displayed on the HMD.
Fig. 7 is a sequence chart illustrating an operation example of the three-dimensional environment sharing system in the first exemplary embodiment.
FIG. 8 is a diagram conceptually illustrating a hardware configuration example of a three-dimensional environment sharing system in a second exemplary embodiment.
FIG. 9 is a diagram conceptually illustrating a process configuration example of a first image processing device in the second exemplary embodiment.
FIG. 10 is a diagram conceptually illustrating a process configuration example of a second image processing device in the second exemplary embodiment.
Fig. 11 is a sequence chart illustrating an operation example of the three-dimensional environment sharing system in the second exemplary embodiment.

### DESCRIPTION OF EXEMPLARY EMBODIMENTS

Hereinafter, exemplary embodiments of the present invention will be described. In addition, the following respective exemplary embodiments are only an example, and the present invention is not limited to configurations of the following respective exemplary embodiments.

A three-dimensional environment sharing system in the present exemplary embodiment includes a first image processing device and a second image processing device. The first image processing device includes: a first image acquisition unit that acquires a first captured image from a first imaging unit; a first object detection unit that detects a known common real object from the first captured image acquired by the first image acquisition unit; a first coordinate setting unit that sets a three-dimensional coordinate space on the basis of the common real object detected by the first object detection unit; and a transmission unit that transmits three-dimensional position information of the three-dimensional coordinate space to the second image processing device. The second image processing device includes: a second image acquisition unit that acquires a second captured image from a second imaging unit which is disposed at a position and in a direction different from a position and a direction of the first imaging unit and of which an imaging region overlaps at least part of an imaging region of the first imaging unit; a second object detection unit that detects the known common real object from the second captured image acquired by the second image acquisition unit; a second coordinate setting unit that sets the same three-dimensional coordinate space as the three-dimensional coordinate space set by the first image processing device on the basis of the common real object detected by the second object detection unit; a reception unit that receives the three-dimensional position information from the first image processing device; and an object processing unit that processes virtual three-dimensional object data to be synthesized with the second captured image by using the three-dimensional position information received by the reception unit.

A three-dimensional environment sharing method in the present exemplary embodiment is performed by a first image processing device and a second image processing device. The three-dimensional environment sharing method includes causing the first image processing device to: acquire a first captured image from a first imaging unit; detect a known common real object from the acquired first captured image; set a three-dimensional coordinate space on the basis of the detected common real object; and transmit three-dimensional position information of the three-dimensional coordinate space to the second image processing device, and causing the second image processing device to: acquire a second captured image from a second imaging unit which is disposed at a position and in a direction different from a position and a direction of the first imaging unit and of which an imaging region overlaps at least part of an imaging region of the first imaging unit; detect the known common real object from the second captured image; set the same three-dimensional coordinate space as the three-dimensional coordinate space set by the first image processing device on the basis of the detected common real object; receive the three-dimensional position information from the first image processing device; and process virtual three-dimensional object data to be synthesized with the second captured image by using the received three-dimensional position information.

In the present exemplary embodiment, in the first image processing device, the first captured image is acquired from the first imaging unit, and, in the second image processing device, the second captured image is acquired from the second imaging unit. Here, the second imaging unit is disposed at a position and in a direction different from a position and a direction of the first imaging unit, and an imaging region thereof overlaps at least part of an imaging region of the first imaging unit. Consequently, the first captured image and the second captured image are images obtained by imaging a certain space or a certain subject of the real world at different positions and from different directions.

In the present exemplary embodiment, in the first image processing device and the second image processing device, a known common real object is detected from each of the first captured image and the second captured image, and each common three-dimensional coordinate space is set on the basis of the detected common real object. The common real object is an image or an object disposed in the real world, and is referred to as an augmented reality (AR) marker or the like. In the present exemplary embodiment, a specific form of the common real object is not limited as long as a certain reference point and three directions which are perpendicular to each other from the reference point can be constantly obtained from the common real object regardless of a reference direction. The first image processing device and the second image processing device hold information on a shape, a size, a color, and the like indicated by the common real object in advance, and detects the common real object from each of the images by using the known information. In addition, the three-dimensional coordinate space indicates a three-dimensional space represented by three-dimensional coordinates.

As mentioned above, according to the present exemplary embodiment, a single three-dimensional coordinate space can be shared between the first image processing device and the second image processing device by using the common real object. In the present exemplary embodiment, three-dimensional position information in the three-dimensional coordinate space shared in the above-described manner is sent from the first image processing device to the second image processing device, and, in the second image processing device, a virtual three-dimensional object data to be synthesized with the second captured image is processed by using the received three-dimensional position information.

The three-dimensional position information transmitted from the first image processing device to the second image processing device is position information regarding, for example, a subject of the real world included in both of the first captured image and the second captured image. Since the three-dimensional position information is represented by using the three-dimensional coordinate space shared between the first image processing device and the second image processing device, according to the present exemplary embodiment, it is possible to generate a virtual three-dimensional object to be disposed in any positional relationship with the subject included in the second captured image.

In addition, the three-dimensional position information may be position information regarding a virtual three-dimensional object to be synthesized with the first captured image. In this case, a virtual three-dimensional object corresponding to the data generated by the second image processing device can be disposed at the same position as that of a virtual three-dimensional object synthesized with the first captured image by the first image processing device in the three-dimensional coordinate space shared between the first image processing device and the second image processing device. Therefore, when the virtual three-dimensional objects are respectively synthesized with the first captured image and the second captured image, and the synthesized images are respectively presented to users, the respective users can feel as if a single virtual three-dimensional object is viewed from respective directions.

Hereinafter, the above-described exemplary embodiment will be described more in detail.

### [First Exemplary Embodiment]

### [Device configuration]

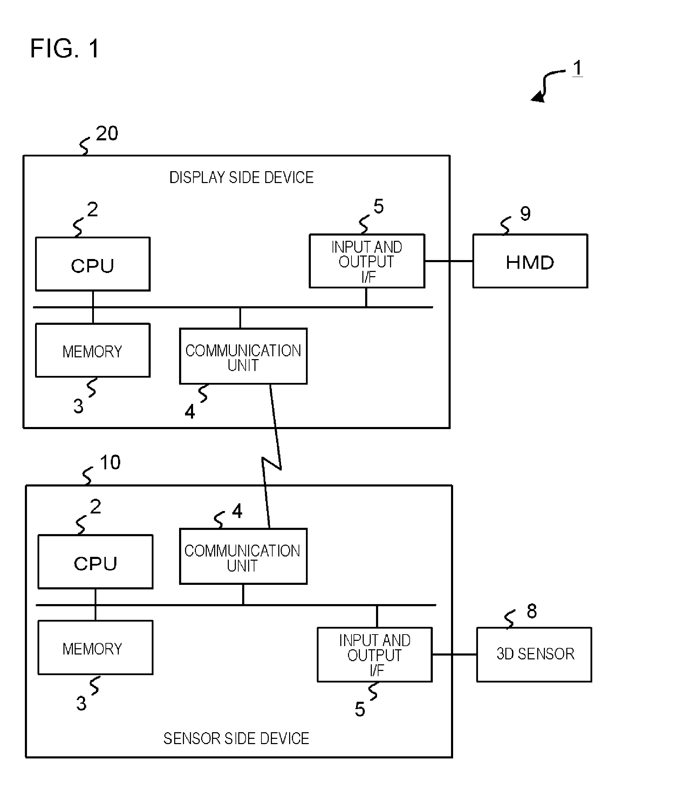

FIG. 1 is a diagram conceptually illustrating a hardware configuration example of a three-dimensional environment sharing system 1 in a first exemplary embodiment. The three-dimensional environment sharing system 1 in the first exemplary embodiment roughly has a sensor side configuration and a display side configuration. The sensor side configuration includes a three-dimensional sensor (hereinafter, referred to as a 3D sensor) 8 and a sensor side device 10. The sensor side device 10 corresponds to a first image processing device of the present invention. The display side configuration includes a head mounted display (hereinafter, referred to as an HMD) 9 and a display side device 20. The display side device 20 corresponds to a second image processing device of the present invention. Hereinafter, three-dimensional is abbreviated to 3D as appropriate.

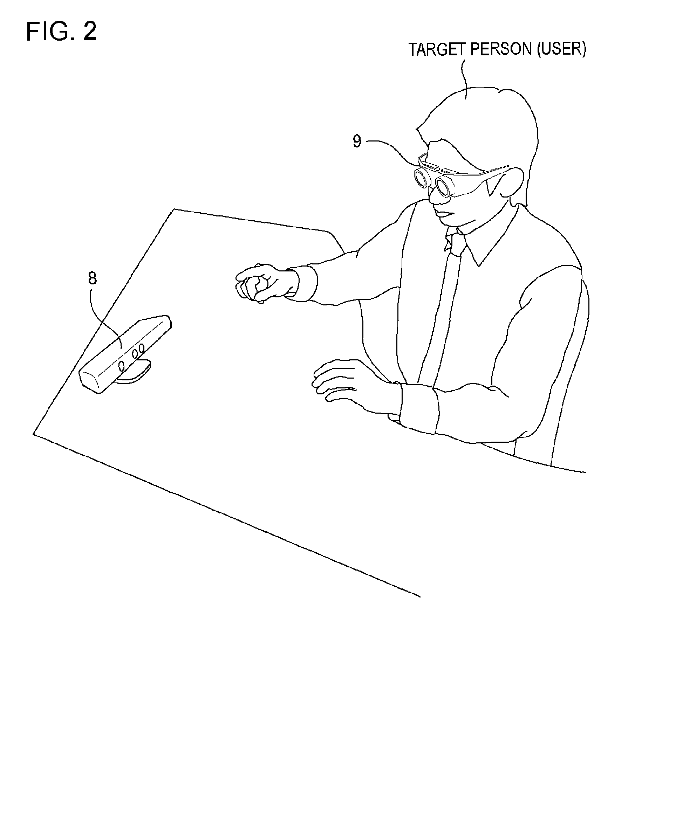

FIG. 2 is a diagram illustrating an example of a form of using the three-dimensional environment sharing system 1 in the first exemplary embodiment. As illustrated in FIG. 2, the 3D sensor 8 is disposed at a position where a specific part of a target person (user) can be detected. The specific part is a part of the body used in order for the target person to operate a virtual 3D object displayed on the HMD 9. In the present exemplary embodiment, the specific part is not limited. The specific part of the target person indicates a subject of a two-dimensional image included in 3D information obtained by the 3D sensor 8 and may thus be referred to as a specific subject. The HMD 9 is mounted on the head of the target person (user), and allows the target person to visually recognize a visual line image corresponding to a visual line of the target person and the above-described virtual 3D object which is synthesized with the visual line image.

The 3D sensor 8 detects 3D information used to perform detection or the like of the specific part of the target person. The 3D information includes a two-dimensional image of the target person based on visible light and information on a distance (depth) from the 3D sensor 8. In other words, the 3D sensor 8, such as Kinect (registered trademark), is implemented by using a visible light camera and a distance image sensor. The distance image sensor is also referred to as a depth sensor, irradiates the target person with a near infrared light pattern from a laser, and calculates a distance (depth) from the distance image sensor to the target person on the basis of information which is obtained by imaging the pattern with a camera which senses the near infrared light. A method of implementing the 3D sensor 8 is not limited, and the 3D sensor 8 maybe implemented in a three-dimensional scanner method of using a plurality of visible light cameras. Further, FIG. 1 illustrates a single 3D sensor 8, but the 3D sensor 8 may be implemented by using a plurality of devices including a visible light camera which captures a two-dimensional image of the target person and a sensor which detects a distance to the target person. The 3D sensor 8 acquires a two-dimensional image in addition to depth information and may thus be referred to as an imaging unit. The 3D sensor 8 corresponds to a first imaging unit of the present invention.

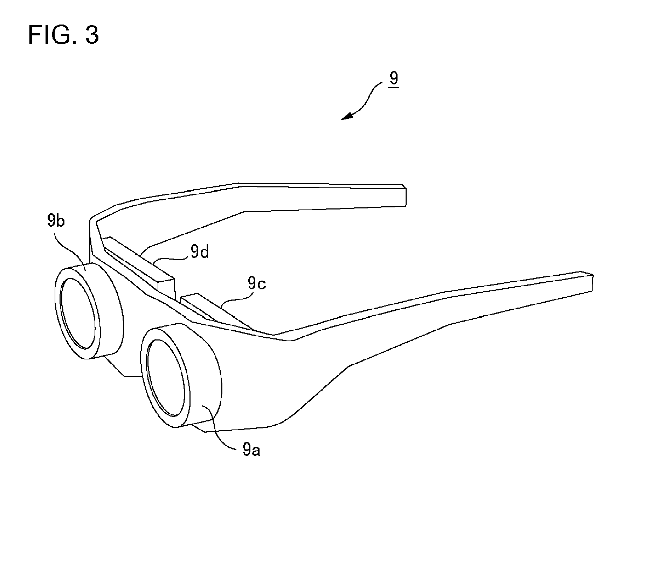

FIG. 3 is a diagram illustrating an example of an exterior configuration of the HMD 9. FIG. 3 illustrates a configuration of the HMD 9 which is called a video see-through type. In the example of FIG. 3, the HMD 9 includes two visual line cameras 9a and 9b and two displays 9c and 9d. The visual line cameras 9a and 9b respectively capture visual line images which respectively correspond to visual lines of the user. Consequently, the HMD 9 may be referred to as an imaging unit. The displays 9c and 9d are disposed in a form of covering most of visual fields of the user, and display synthesized 3D images in which the virtual 3D object is synthesized with the visual line images. The HMD 9 corresponds to a second imaging unit of the present invention.

Each of the sensor side device 10 and the display side device 20 includes a central processing unit (CPU) 2, a memory 3, a communication unit 4, an input and output interface (I/F) 5, and the like, connected to each other through a bus or the like. The memory 3 is a random access memory (RAM), a read only memory (ROM), a hard disk, a portable storage medium, or the like.

The input and output I/F 5 of the sensor side device 10 is connected to the 3D sensor 8, and the input and output I/F 5 of the display side device 20 is connected to the HMD 9. The input and output I/F 5 and the 3D sensor 8, and the input and output I/F 5 and the HMD 9 may be connected to each other so as to communicate with each other in a wireless manner. Each communication unit 4 performs communication with other devices (the sensor side device 10, the display side device 20, and the like) in a wireless or wired manner. In the present exemplary embodiment, a communication form is not limited. In addition, specific hardware configurations of the sensor side device 10 and the display side device 20 are not limited either.

### [Process Configuration]

### <Sensor side device>

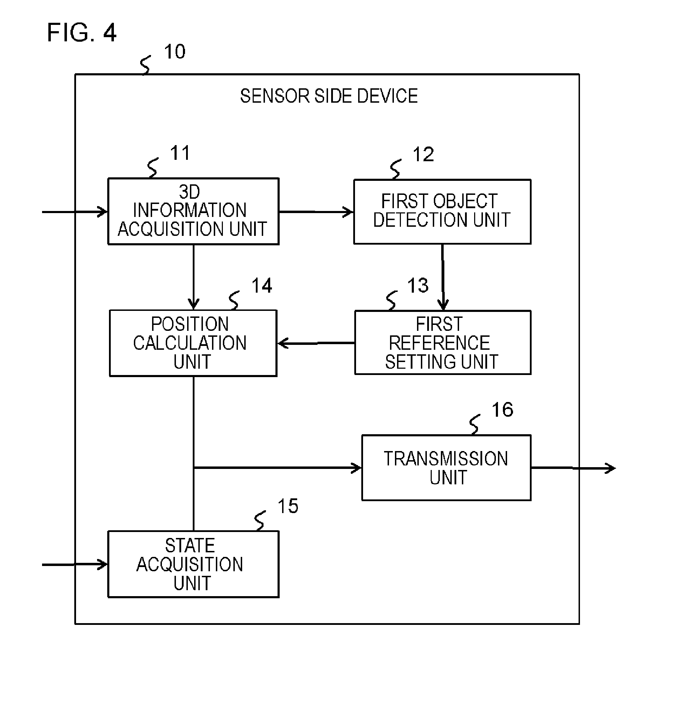

FIG. 4 is a diagram conceptually illustrating a process configuration example of the sensor side device 10 in the first exemplary embodiment. The sensor side device 10 in the first exemplary embodiment includes a 3D information acquisition unit 11, a first object detection unit 12, a first reference setting unit 13, a position calculation unit 14, a state acquisition unit 15, a transmission unit 16, and the like. Each of the processing units is realized, for example, by the CPU 2 executing a program stored in the memory 3. In addition, the program may be installed and stored in the memory 3, for example, through the input and output I/F 5 from a portable recording medium such as a compact disc (CD) or a memory card, or other computers on a network.

The 3D information acquisition unit 11 sequentially acquires 3D information detected by the 3D sensor 8. The 3D information acquisition unit 11 corresponds to a first image acquisition unit of the present invention.

The first object detection unit 12 detects a known common real object from the 3D information which is acquired by the 3D information acquisition unit 11. The common real object is an image or an object disposed in the real world, and is referred to as an augmented reality (AR) marker or the like. In the present exemplary embodiment, a specific form of the common real object is not limited as long as a certain reference point, and three directions which are perpendicular to each other from the reference point can be constantly obtained from the common real object regardless of a reference direction. The first object detection unit 12 holds information on a shape, a size, a color, and the like indicated by the common real object in advance, and detects the common real object from the 3D information by using the known information.

The first reference setting unit 13 sets a 3D coordinate space on the basis of the common real object detected by the first object detection unit 12, and calculates a position and a direction of the 3D sensor 8 in the 3D coordinate space. For example, the first reference setting unit 13 uses a reference point extracted from the common real object as an origin, and sets a 3D coordinate space which has three directions perpendicular to each other from the reference point as axes. The first reference setting unit 13 compares known shape and size (corresponding to original shape and size) regarding the common real object with a shape and a size (corresponding to an appearance from the 3D sensor 8) of the common real object extracted from the 3D information to calculate a position and a direction of the 3D sensor 8. The first reference setting unit 13 corresponds to a first coordinate setting unit of the present invention.

The position calculation unit 14 sequentially calculates 3D position information on the 3D coordinate space regarding the specific part of the target person by using the 3D information which is sequentially acquired by the 3D information acquisition unit 11. In the first exemplary embodiment, the position calculation unit 14 calculates the 3D position information, specifically, as follows. First, the position calculation unit 14 extracts 3D position information of the specific part of the target person from the 3D information which is acquired by the 3D information acquisition unit 11. The 3D position information extracted here corresponds to a camera coordinate system of the 3D sensor 8. Thus, the position calculation unit 14 converts the 3D position information corresponding to the camera coordinate system of the 3D sensor 8 into 3D position information on the 3D coordinate space set by the first reference setting unit 13, on the basis of the position and the direction of the 3D sensor 8 and the 3D coordinate space set-and-calculated by the first reference setting unit 13. This conversion indicates conversion from the camera coordinate system of the 3D sensor 8 into a 3D coordinate system which is set on the basis of the common real object.

Here, a plurality of specific parts of the target person may be detected. For example, as the plurality of specific parts, there may be a form of using both hands of the target person. In this case, the position calculation unit 14 extracts 3D position information of each of a plurality of specific parts from 3D information acquired by the 3D information acquisition unit 11, and converts each piece of the 3D position information into each piece of 3D position information on a 3D coordinate space. The specific part is a part of the body used in order for the target person to operate a virtual 3D object displayed on the display unit and thus has an area or a volume to a certain degree.

Therefore, the 3D position information calculated by the position calculation unit 14 may be position information of a certain point within the specific part, and may be position information of a plurality of points.

The state acquisition unit 15 acquires state information of the specific part of the target person. This specific part is the same as the specific part which is a detection target of the position calculation unit 14. In the present exemplary embodiment, the number of states indicated by the state information is not limited in a detectable range. In a case where a plurality of specific parts are used, the state acquisition unit 15 respectively acquires state information regarding each specific part.

The state acquisition unit 15 holds in advance, for example, image feature information corresponding to each state of the specific part to be identified, and acquires the state information of the specific part by comparing feature information extracted from a two-dimensional image included in the 3D information which is acquired by the 3D information acquisition unit 11 with each piece of the image feature information held in advance. The state acquisition unit 15 may acquire the state information of the specific part from information which is obtained from a distortion sensor (not illustrated) mounted on the specific part. Further, the state acquisition unit 15 may acquire the state information from information which is obtained from an input mouse (not illustrated) operated with the target person's hand. Still further, the state acquisition unit 15 may acquire the state information by recognizing a voice which is obtained by a microphone (not illustrated).

The transmission unit 16 sends the 3D position information on the 3D coordinate space calculated by the position calculation unit 14, regarding the specific part of the target person, and the state information acquired by the state acquisition unit 15, to the display side device 20.

### <Display side device>

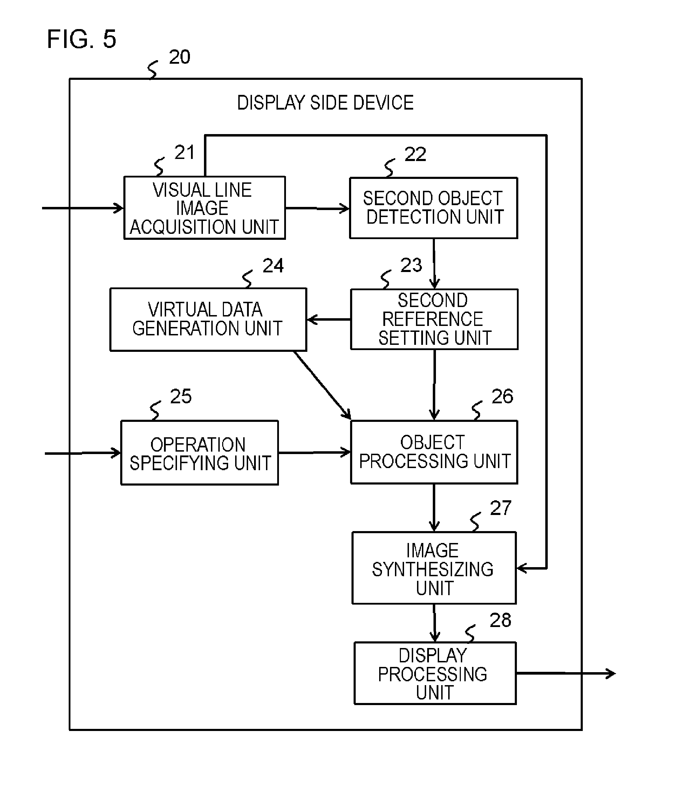

FIG. 5 is a diagram conceptually illustrating a process configuration example of the display side device 20 in the first exemplary embodiment. The display side device 20 in the first exemplary embodiment includes a visual line image acquisition unit 21, a second object detection unit 22, a second reference setting unit 23, a virtual data generation unit 24, an operation specifying unit 25, an object processing unit 26, an image synthesizing unit 27, a display processing unit 28, and the like. Each of the processing units is realized, for example, by the CPU 2 executing a program stored in the memory 3. In addition, the program may be installed and stored in the memory 3, for example, through the input and output I/F 5 from a portable recording medium such as a compact disc (CD) or a memory card, or other computers on a network.

The visual line image acquisition unit 21 acquires visual line images in which a specific part of the target person is reflected, from the HMD 9. This specific part is the same as the specific part which is a detection target of the sensor side device 10. In the present exemplary embodiment, since the visual line cameras 9a and 9b are provided, the visual line image acquisition unit 21 acquires visual line images which respectively correspond to the left eye and the right eye. Each of the processing units performs a process on both of the visual line images corresponding to the left eye and the right eye, and thus a single visual line image will be described in the following description. The visual line image acquisition unit 21 corresponds to a second image acquisition unit of the present invention.

The second object detection unit 22 detects a known common real object from the visual line images which are acquired by the visual line image acquisition unit 21. This common real object is the same as the object detected by the above-described sensor side device 10. A process in the second object detection unit 22 is the same as the process in the first object detection unit 12 of the above-described sensor side device 10, and thus a detailed description thereof will not be repeated here. The common real object included in the visual line images is different in an imaging direction from the common real object included in the 3D information obtained by the 3D sensor 8.

The second reference setting unit 23 sets the 3D coordinate space which has been set by the first reference setting unit 13 of the sensor side device 10 on the basis of the common real object detected by the second object detection unit 22, and calculates a position and a direction of the HMD 9. A process in the second reference setting unit 23 is also the same as the process in the first reference setting unit 13 of the sensor side device 10, and thus a detailed description will not be repeated. The 3D coordinate space set by the second reference setting unit 23 is set on the basis of the same common real object as in the 3D coordinate space which is set by the first reference setting unit 13 of the sensor side device 10, and, as a result, the 3D coordinate space is shared between the sensor side device 10 and the display side device 20. The second reference setting unit 23 corresponds to a second coordinate setting unit of the present invention.

The virtual data generation unit 24 generates data of the virtual 3D object disposed in the 3D coordinate space which is shared with the sensor side device 10 by the second reference setting unit 23. The virtual data generation unit 24 may generate data of a virtual 3D space in which the virtual 3D object is disposed, along with the virtual 3D object data.

The operation specifying unit 25 receives the 3D position information on the 3D coordinate space and the state information regarding the specific part of the target person, from the sensor side device 10, and specifies a single predetermined process to be performed by the object processing unit 26 from among a plurality of predetermined processes on the basis of a combination of the state information and a change in the 3D position information. The operation specifying unit 25 corresponds to a reception unit of the present invention. The change in the 3D position information is calculated on the basis of a relationship with the 3D position information which is obtained at the time of the previous process. In a case where a plurality of specific parts (for example, both hands) are used, the operation specifying unit 25 calculates a positional relationship between the plurality of specific parts on the basis of a plurality of pieces of 3D position information acquired from the sensor side device 10, and specifies a single predetermined process from among a plurality of pieces of predetermined processes on the basis of a change in the calculated positional relationship between the plurality of specific parts, and the plurality of pieces of state information. The plurality of predetermined processes include a movement process, a rotation process, an enlargement process, a reduction process, an addition process of display data of a function menu, and the like.

More specifically, the operation specifying unit 25 specifies the following predetermined process. For example, in a case where a specific part of the target person is one hand, the operation specifying unit 25 specifies a movement process by a distance corresponding to a linear movement amount of the one hand of the target person while the one hand is maintained in a specific state (for example, a closed state). In a case where a distance from a specific point of the virtual 3D object is not changed before and after a movement of the one hand while the one hand is maintained in a specific state, the operation specifying unit 25 specifies, as a predetermined process, a rotation process with the specific point as a reference point on the basis of a solid angle change amount of a line segment joining the one hand of the target person and the specific point of the virtual 3D object. The specific point of the virtual 3D object is, for example, a central point. Further, the operation specifying unit 25 measures a period in which state information and three-dimensional position information are not changed, and specifies a process of adding display data of the function menu to the data of the virtual 3D space in which the virtual 3D object is disposed in a case where the measured period exceeds a predetermined period.

In a case where a plurality of specific parts are both hands of the target person, the operation specifying unit 25 specifies the following predetermined process. The operation specifying unit 25 specifies an enlargement process with a position of one hand of the target person as a reference point at a magnification ratio corresponding to a change amount of a distance between both the hands of the target person while both the hands are maintained in a specific state (for example, a closed state). The operation specifying unit 25 specifies a reduction process with a position of one hand of the target person as a reference point at a reduction ratio corresponding to a change amount of a distance between both the hands of the target person while both the hands are maintained in a specific state (for example, a closed state). Further, the operation specifying unit 25 specifies a rotation process with a position of the one hand of the target person as a reference point on the basis of a solid angle change amount of a line segment joining both hands of the target person while both the hands are maintained in a specific state (for example, a closed state).

Further, the operation specifying unit 25 determines whether or not the specific part is present within a predetermined 3D range which has the virtual 3D object as a reference on the basis of the three-dimensional position information of the specific part of the target person, and determines whether or not the predetermined process is to be performed by the object processing unit 26 according to a determination result thereof. Specifically, if the specific part is present within the predetermined 3D range, the operation specifying unit 25 causes the object processing unit 26 to perform the predetermined process, and if the specific part is present outside the predetermined 3D range, the operation specifying unit 25 causes the object processing unit 26 not to perform the predetermined process. The determination of whether or not the specific part is present within the predetermined 3D range is to simulate a determination of whether or not the specific part of the target person accesses the virtual 3D object. In the present exemplary embodiment, an intuitive operation feeling of the target person is improved by determining whether or not the predetermined process is to be performed by using the predetermined 3D range.

The operation specifying unit 25 may detect a movement of the specific part of the target person from within the predetermined 3D range to the outside of the predetermined 3D range, and may specify, as the predetermined process, a movement process or a rotation process corresponding to a movement distance between a position within the predetermined 3D range and a position outside the predetermined 3D range and a movement direction before and after the movement. Consequently, the target person can move or rotate the virtual 3D object in an inertial manner by an operation up until right before the operation for the virtual 3D object becomes unable. This inertial operation may be switched between being valid and invalid according to settings.

The operation specifying unit 25 holds an ID for identifying each predetermined process as described above, and specifies the predetermined process by selecting the ID corresponding to the predetermined process. The operation specifying unit 25 delivers the selected ID to the object processing unit 26, and thus causes the object processing unit 26 to perform the predetermined process.

The object processing unit 26 applies the predetermined process specified by the operation specifying unit 25 to the virtual 3D object data generated by the virtual data generation unit 24. The object processing unit 26 is realized so as to perform a plurality of supporting predetermined processes.

The image synthesizing unit 27 synthesizes the visual line images acquired by the visual line image acquisition unit 21 with the virtual 3D object corresponding to the virtual 3D object data on which the predetermined process has been performed by the object processing unit 26, on the basis of the position and the direction of the HMD 9 and the 3D coordinate space set-and-calculated by the second reference setting unit 23. A well-known method used in augmented reality (AR) or the like may be employed in the synthesizing process in the image synthesizing unit 27, and thus description thereof will not be repeated here.

The display processing unit 28 displays the synthesized image obtained by the image synthesizing unit 27 on the HMD 9. In the present exemplary embodiment, since two visual line images respectively corresponding to the visual lines of the target person are processed as described above, the display processing unit 28 displays synthesized images in which the virtual 3D object is synthesized with the visual line images on the displays 9c and 9d of the HMD 9, respectively.

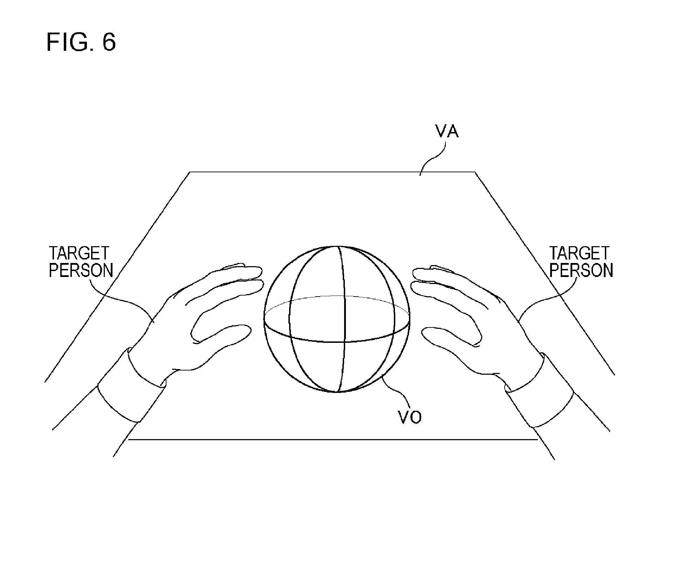

FIG. 6 is a diagram illustrating an example of the synthesized image displayed on the HMD 9. The synthesized image illustrated in the example of FIG. 6 includes a spherical virtual 3D object VO disposed on a plane VA which is included in the virtual 3D space. The user moves both of his or her hands while taking a look at the image with the HMD 9, and thus can operate the virtual 3D object VO included in the image. FIG. 6 exemplifies the spherical virtual 3D object VO, but a shape or the like of a virtual 3D object is not limited.

### [Operation Example]

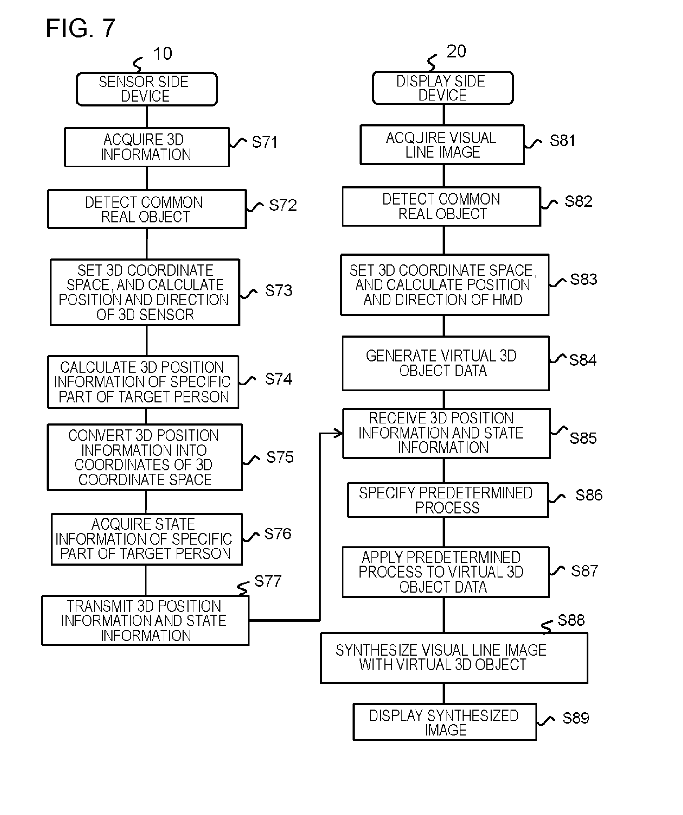

Hereinafter, a three-dimensional environment sharing method in the first exemplary embodiment will be described with reference to FIG. 7. FIG. 7 is a sequence chart illustrating an operation example of the three-dimensional environment sharing system 1 in the first exemplary embodiment.

The sensor side device 10 sequentially acquires 3D information from the 3D sensor 8 (step S71). The sensor side device 10 operates as follows in relation to the 3D information with a predetermined frame rate.

The sensor side device 10 detects a common real object from the 3D information (step S72).

Next, the sensor side device 10 sets a 3D coordinate space on the basis of the detected common real object, and calculates a position and a direction of the 3D sensor 8 in the 3D coordinate space (step S73).

Further, the sensor side device 10 calculates the 3D position information of a specific part of the target person by using the 3D information (step S74). Still further, the sensor side device 10 converts the 3D position information calculated in step S74 into 3D position information on the 3D coordinate space which is set in step S73 on the basis of the position and the direction of the 3D sensor 8 and the 3D coordinate space set-and-calculated in step S73 (step S75).

The sensor side device 10 acquires state information regarding the specific part of the target person (step S76).

The sensor side device 10 sends the 3D position information obtained in step S75 and the state information obtained in step S76, regarding the specific part of the target person, to the display side device 20 (step S77).

In FIG. 7, for convenience of description, an example has been described in which the acquisition of the 3D information (step S71) and the acquisition of the state information (step S76) are sequentially executed, but steps S71 and S76 are executed in parallel in a case where the state information of the specific part is obtained from information other than the 3D information. In FIG. 7, an example has been described in which steps S72 and S73 are executed at a predetermined frame rate of the 3D information, but steps S72 and S73 may be executed only during calibration.

On the other hand, the display side device 20 sequentially acquires a visual line image from the HMD 9 in non-synchronization with the acquisition of the 3D information (step S71) (step S81). The display side device 20 operates as follows in relation to the visual line image with a predetermined frame rate.

The display side device 20 detects the common real object from the visual line image (step S82).

Next, the display side device 20 sets the 3D coordinate space on the basis of the detected common real object, and calculates a position and a direction of the HMD 9 in the 3D coordinate space (step S83).

The display side device 20 generates data of the virtual 3D object disposed in the set 3D coordinate space (step S84).

When the 3D position information and the state information regarding the specific part of the target person are received from the sensor side device 10 (step S85), the display side device 20 specifies a predetermined process corresponding to a gesture of the target person according to a combination of a change in the 3D position information and the state information of the specific part (step S86). In a case where there are a plurality of specific parts, the display side device 20 specifies a predetermined process according to a combination of a change in a positional relationship between the plurality of specific parts and a plurality of pieces of state information.

The display side device 20 applies the predetermined process specified in step S86 to the virtual 3D object data generated in step S84 (step S87). Next, the display side device 20 synthesizes a virtual 3D object corresponding to the virtual 3D object data which has undergone a predetermined process with the visual line image (step S88) so as to generate display data.

The display side device 20 displays the image obtained through the synthesizing on the HMD 9 (step S89).

In FIG. 7, for convenience of description, an example has been described in which the process (from step S85 to step S87) on the information regarding the specific part of the target person, sent from the sensor side device 10, and the generation process (from step S82 to step S84) of the virtual 3D object data are sequentially performed. However, step S85 to step S87 and step S82 to step S84 are executed in parallel to each other. In addition, in FIG. 7, an example has been described in which step S82 to step S84 are executed at a predetermined frame rate of the visual line image, but step S82 to step S84 may be executed only during calibration.

### [Operations and Effects of First Exemplary Embodiment]

In the first exemplary embodiment, the HMD 9 for obtaining a visual line image of the target person and the 3D sensor 8 for obtaining a position of a specific part of the target person are separately provided. Consequently, according to the first exemplary embodiment, the 3D sensor 8 can be disposed at a position where a 3D position of the specific part of the target person can be accurately measured. This is because there may be present a 3D sensor 8 which cannot accurately measure a position of a measurement target unless the 3D sensor is spaced apart from the measurement target to some extent.

In addition, in the first exemplary embodiment, a 3D coordinate space shared between the sensors is set on the basis of information obtained by the sensors (the 3D sensor 8 and the HMD 9) which are separately provided, by using a common real object. As mentioned above, according to the first exemplary embodiment, it is possible to share a single three-dimensional environment between the 3D sensor 8 and the HMD 9 which process a two-dimensional image (included in 3D information) and a visual line image captured at different positions and from different directions.

By using this shared 3D coordinate space, a position of a specific part of the target person is determined, and virtual 3D object data is generated and processed. Further, in the first exemplary embodiment, by using the shared 3D coordinate space, it is determined whether or not the specific part of the target person is present within a predetermined 3D range with reference to a virtual 3D object, and it is determined whether or not an operation on the virtual 3D object is valid on the basis of the determination result. Therefore, according to the first exemplary embodiment, the target person can intuitively visually recognize a relationship between the virtual 3D object and the specific part thereof, and, as a result, the target person can be given an intuitive operation feeling of the virtual 3D object as if the target person directly touches the virtual 3D object.

Still further, in the first exemplary embodiment, a predetermined process is applied to the virtual 3D object data based on a combination of a positional change and a state regarding the specific part of the target person, but the state may not be taken into consideration. In this case, the state acquisition unit 15 of the sensor side device 10 is not necessary, and thus the information transmitted from the sensor side device 10 to the display side device 20 may be only 3D position information regarding the specific part of the target person.

### [Second Exemplary Embodiment]

A three-dimensional environment sharing system 1 in a second exemplary embodiment synthesizes a virtual 3D object with visual line images captured by respective HMDs 9 which are worn by a plurality of target persons (users) and displays respective synthesized images on the HMDs 9, thereby enables sharing the virtual 3D object between the plurality of users.

### [Device Configuration]

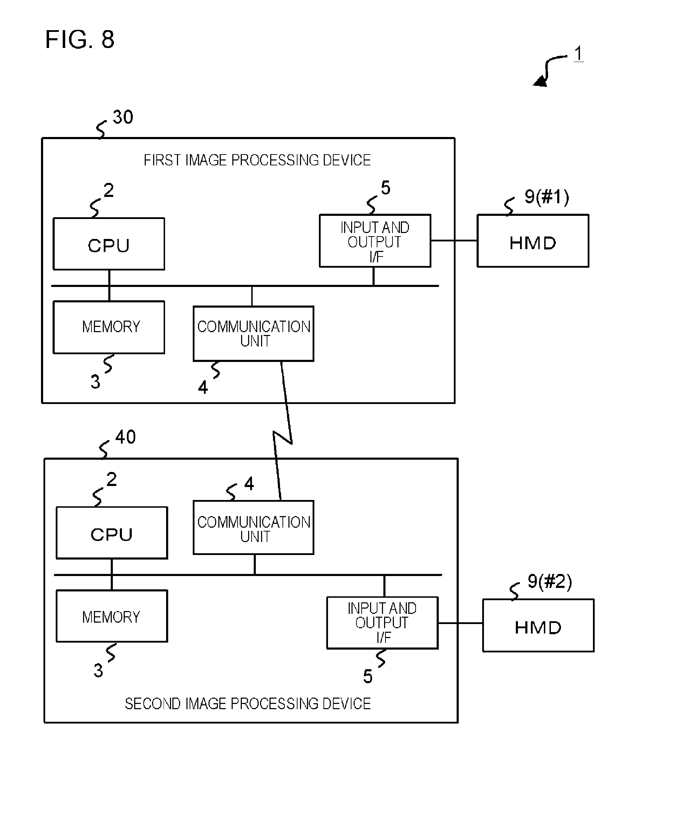

Fig. 8 is a diagram conceptually illustrating a hardware configuration example of the three-dimensional environment sharing system 1 in the second exemplary embodiment. The three-dimensional environment sharing system 1 in the second exemplary embodiment includes a first image processing device 30, a second image processing device 40, and two HMDs 9. The first image processing device 30 is connected to an HMD 9 (#1), and the second image processing device 40 is connected to an HMD 9 (#2).

In the second exemplary embodiment, the HMD 9 (#1) corresponds to a first imaging unit of the present invention, and the HMD 9 (#2) corresponds to a second imaging unit of the present invention. As mentioned above, in the second exemplary embodiment, visual line images of respective users are captured by the HMD 9 (#1) and the HMD 9 (#2) worn by the respective users. Hereinafter, a visual line image captured by the HMD 9 (#1) is referred to as a first visual line image, and a visual line image captured by the HMD 9 (#2) is referred to as a second visual line image. The first image processing device 30 and the second image processing device 40 have the same hardware configuration as that of the display side device 20 of the first exemplary embodiment, and thus description thereof will not be repeated.

### [Process Configuration]

### <First image processing device>

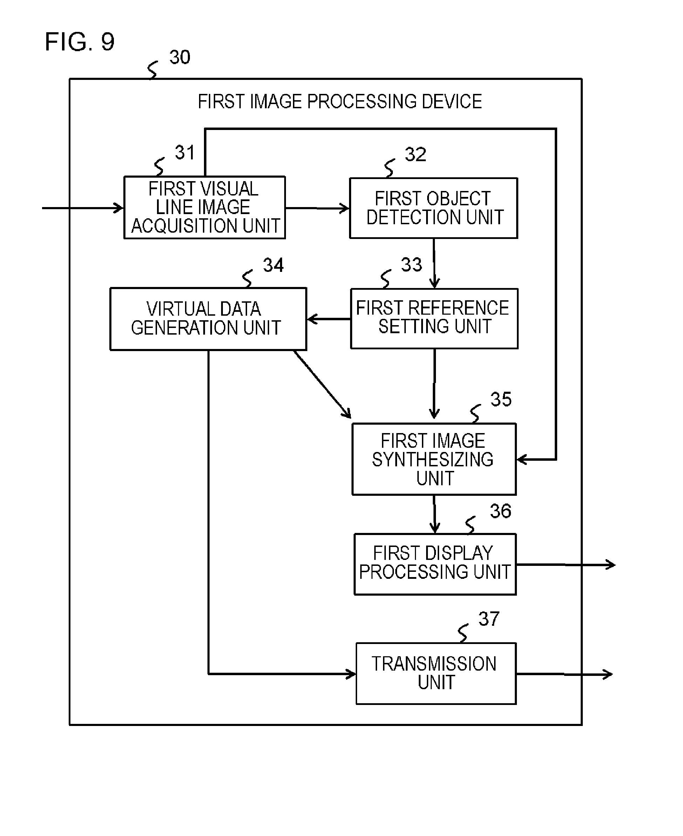

Fig. 9 is a diagram conceptually illustrating a process configuration example of the first image processing device 30 in the second exemplary embodiment. The first image processing device 30 in the second exemplary embodiment includes a first visual line image acquisition unit 31, a first object detection unit 32, a first reference setting unit 33, a virtual data generation unit 34, a first image synthesizing unit 35, a first display processing unit 36, a transmission unit 37, and the like. Each of the processing units is realized, for example, by the CPU 2 executing a program stored in the memory 3. The program may be installed and stored in the memory 3, for example, through the input and output I/F 5 from a portable recording medium such as a compact disc (CD) or a memory card, or other computers on a network.

The first visual line image acquisition unit 31 acquires a first visual line image captured by the HMD 9 (#1). The first object detection unit 32 performs a process on the first visual line image. Detailed processes in the first visual line image acquisition unit 31, the first object detection unit 32, and the first reference setting unit 33 are the same as those in the visual line image acquisition unit 21, the second object detection unit 22, and the second reference setting unit 23 in the first exemplary embodiment, and thus description thereof will not be repeated. The first visual line image acquisition unit 31 corresponds to a first image acquisition unit of the present invention, and the first reference setting unit 33 corresponds to a first coordinate setting unit and a first reference setting unit of the present invention.

The virtual data generation unit 34 generates data of the virtual 3D object disposed in the 3D coordinate space on the basis of the 3D coordinate space set by the first reference setting unit 33. The virtual data generation unit 34 may generate data of a virtual 3D space in which a virtual 3D object is disposed, along with the virtual 3D object data. The virtual 3D object data includes three-dimensional position information, direction information, shape information, color information, and the like regarding the virtual 3D object.

The first image synthesizing unit 35 synthesizes the virtual 3D object corresponding to the virtual 3D object data generated by the virtual data generation unit 34 with the first visual line image acquired by the first visual line image acquisition unit 31, on the basis of the position and the direction of the HMD 9 (#1) and the 3D coordinate space set-and-calculated by the first reference setting unit 33.

The first display processing unit 36 displays the synthesized image generated by the first image synthesizing unit 35 on the displays 9c and 9d of the HMD 9.

The transmission unit 37 transmits the three-dimensional position information included in the virtual 3D object data generated by the virtual data generation unit 34 to the second image processing device 40. Here, the virtual 3D object data itself may be transmitted.

### <Second image processing device>

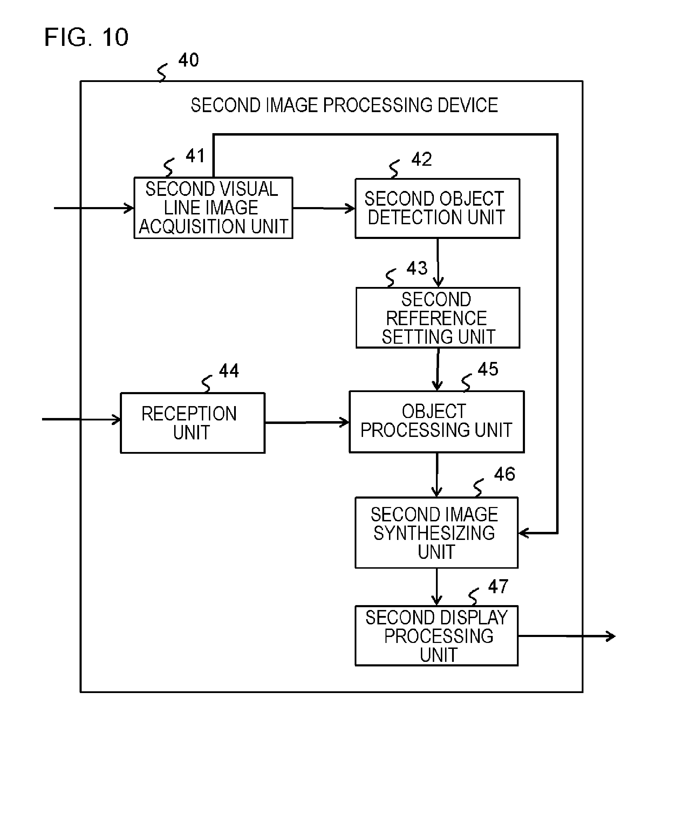

Fig. 10 is a diagram conceptually illustrating a process configuration example of the second image processing device 40 in the second exemplary embodiment. The second image processing device 40 in the second exemplary embodiment includes a second visual line image acquisition unit 41, a second object detection unit 42, a second reference setting unit 43, a reception unit 44, an object processing unit 45, a second image synthesizing unit 46, a second display processing unit 47, and the like. Each of the processing units is realized, for example, by the CPU 2 executing a program stored in the memory 3. In addition, the program may be installed and stored in the memory 3, for example, through the input and output I/F 5 from a portable recording medium such as a compact disc (CD) or a memory card, or other computers on a network.

The second visual line image acquisition unit 41 acquires a second visual line image captured by the HMD 9 (#2). The second object detection unit 42 performs a process on the second visual line image. Detailed processes in the second visual line image acquisition unit 41, the second object detection unit 42, and the second reference setting unit 43 are the same as those in the visual line image acquisition unit 21, the second object detection unit 22, and the second reference setting unit 23 in the first exemplary embodiment, and thus description thereof will not be repeated. The second visual line image acquisition unit 41 corresponds to a second image acquisition unit of the present invention, and the second reference setting unit 43 corresponds to a second coordinate setting unit and a second reference setting unit of the present invention.

The reception unit 44 receives the 3D position information of the 3D coordinate space transmitted from the first image processing device 30. As described above, the reception unit 44 may receive the virtual 3D object data.

The object processing unit 45 processes the virtual 3D object data to be synthesized with the second visual line image by using the three-dimensional position information received by the reception unit 44. For example, the object processing unit 45 reflects the received three-dimensional position information in the virtual 3D object data which already has held. The virtual 3D object data other than the three-dimensional position information which already has held may be acquired from the first image processing device 30, may be acquired from other devices, and may be held in advance.

The second image synthesizing unit 46 synthesizes the virtual 3D object corresponding to the virtual 3D object data processed by the object processing unit 45 with the second visual line image on the basis of the position and the direction of the HMD 9 (#2) and the 3D coordinate space.

The second display processing unit 47 displays the synthesized image obtained by the second image synthesizing unit 46 on the displays 9c and 9d of the HMD 9.

### [Operation Example]

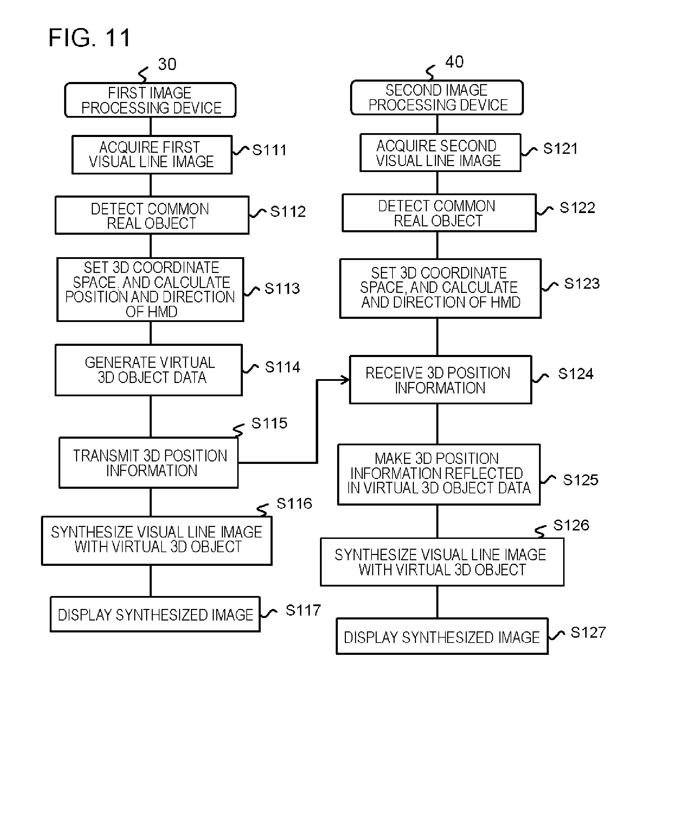

Hereinafter, a three-dimensional environment sharing method in the second exemplary embodiment will be described with reference to Fig. 11. Fig. 11 is a sequence chart illustrating an operation example of the three-dimensional environment sharing system 1 in the second exemplary embodiment.

Step S111 to step S113 executed by the first image processing device 30 and step S121 to step S123 executed by the second image processing device 40 are the same in content thereof except for process targets (a first visual line image and a second visual line image). In addition, the content of step S111 to step S113 and the content of step S121 to step S123 is the same as that of step S81 to step S83 of Fig. 7 described above. In other words, the first image processing device 30 calculates a position and a direction of the HMD 9 (#1) and a 3D coordinate space by using a first visual line image captured by the HMD 9 (#1), and the second image processing device 40 calculates a position and a direction of the HMD 9 (#2) and a 3D coordinate space by using a second visual line image captured by the HMD 9 (#2).

Next, the first image processing device 30 generates data of the virtual 3D object disposed in the 3D coordinate space (step S114). The first image processing device 30 transmits 3D position information of the virtual 3D object indicated by the data to the second image processing device 40 (step S115). The 3D position information of the virtual 3D object transmitted here is represented by using a 3D coordinate space.

The first image processing device 30 synthesizes the first visual line image captured by the HMD 9 (#1) with the virtual 3D object corresponding to the data (step S116), and displays the synthesized image on the HMD 9 (#1) (step S117).

On the other hand, when the 3D position information is received from the first image processing device 30 (step S124), the second image processing device 40 reflects the received 3D position information in the virtual 3D object data (step S125).

The second image processing device 40 synthesizes the virtual 3D object with the visual line image captured by the HMD 9 (#2) (step S126), and displays the synthesized image on the HMD 9 (#2) (step S127).

In the example of Fig. 11, only the three-dimensional position information is transmitted from the first image processing device 30 to the second image processing device 40, but the virtual 3D object data generated in step S114 may be transmitted from the first image processing device 30 to the second image processing device 40. In this case, the second image processing device 40 generates the virtual 3D object data indicating a form to be synthesized with the second visual line image by using the received virtual 3D object data.

### [Operations and Effects of Second Exemplary Embodiment]

As mentioned above, in the second exemplary embodiment, the HMD 9 (#1) and the HMD 9 (#2) are respectively worn by two users, and different visual line images are respectively captured by the HMDs 9. In addition, a 3D coordinate space common to the HMDs 9 is set by using a common real object included in the visual line images. Therefore, according to the second exemplary embodiment, it is possible to share a single three-dimensional environment between the HMD 9 (#1) and the HMD 9 (#2) which process visual line images captured at different positions and in different directions.

In the second exemplary embodiment, virtual 3D object data is generated by using the common 3D coordinate space, a virtual 3D object corresponding to the data is synthesized with the first visual line image, and the synthesized image is displayed on one of the HMDs 9. On the other hand, at least 3D position information of the virtual 3D object is sent from the first image processing device 30 to the second image processing device 40, a virtual 3D object in which the 3D position information is reflected is synthesized with the second visual line image, and the synthesized image is displayed on the other HMD 9.

As mentioned above, in the second exemplary embodiment, since a common 3D coordinate space is set by using each visual line image, and a virtual 3D object is synthesized with each visual line image by using the common 3D coordinate space, the reflected 3D spaces of the real world can match each other between the visual line images, and the virtual 3D object can be artificially disposed in the 3D spaces of the real world. Consequently, according to the second exemplary embodiment, each user who wears the HMD 9 can share a single virtual 3D object and can feel as if the virtual 3D object really exists in a 3D space of the real world which is visually recognized in a visual line image.

In the above-described second exemplary embodiment, two sets of the HMDs 9 and the image processing devices have been described, but the three-dimensional environment sharing system 1 may be constituted by three or more sets of the HMDs 9 and the image processing devices. In this case, a virtual 3D object can be shared by three or more users.

### [Modification Examples]

In the above-described first exemplary embodiment and second exemplary embodiment, as illustrated in FIG. 3, the HMD 9 has the visual line cameras 9a and 9b and the displays 9c and 9d corresponding to both eyes of the target person (user), but may have a single visual line camera and a single display. In this case, the single display may be disposed to cover a visual field of one eye of the target person, and may be disposed to cover visual fields of both eyes of the target person. In this case, the virtual data generation unit 24 and the virtual data generation unit 34 may generate virtual 3D object data by using a well-known 3DCG technique so as to display a display object included in a virtual 3D space with 3DCG.

In addition, in the above-described first exemplary embodiment and second exemplary embodiment, the video see-through type HMD 9 is used to obtain visual line images, but an optical see-through type HMD 9 may be used. In this case, half mirror displays 9c and 9d may be provided in the HMD 9, and a virtual 3D object may be displayed on the displays 9c and 9d. However, in this case, a camera used to obtain an image for detecting a common real object in a visual line direction of a target person is provided at a location which does not shield a visual field of the target person of the HMD 9.

In addition, in the sequence chart used for the above description, a plurality of steps (processes) are sequentially disclosed, but an execution order of steps executed in the present exemplary embodiment is not limited to the described order. In the present exemplary embodiment, an order of illustrated steps may be changed within a range of not causing trouble in content.

Further, the above-described respective exemplary embodiments and modification examples may be combined with each other within a range of not causing conflict in content. For example, as a form of combining the first exemplary embodiment with the second exemplary embodiment, the three-dimensional environment sharing system 1 may include at least one sensor side device 10 described in the first exemplary embodiment, in the configuration of the second exemplary embodiment. In this case, the first image processing device 30 and the second image processing device 40 respectively acquire 3D position information pieces of specific parts of users from at least one sensor side device 10, and each virtual 3D object synthesized with each visual line image may be operated on the basis of the 3D position information as in the first exemplary embodiment.

This application claims the benefit of Japanese Priority Patent Application JP 2012-167102 filed July 27, 2012, the entire contents of which are incorporated herein by reference.

## Claims

1. A three-dimensional environment sharing system comprising:
a first image processing device; and
a second image processing device,
wherein the first image processing device includes:
a first image acquisition unit that acquires a first captured image from a first imaging unit;
a first object detection unit that detects a known common real object from the first captured image acquired by the first image acquisition unit;
a first coordinate setting unit that sets a three-dimensional coordinate space on the basis of the common real object detected by the first object detection unit; and
a transmission unit that transmits three-dimensional position information of the three-dimensional coordinate space to the second image processing device,
wherein the second image processing device includes:
a second image acquisition unit that acquires a second captured image from a second imaging unit which is disposed at a position and in a direction different from a position and a direction of the first imaging unit and of which an imaging region overlaps at least part of an imaging region of the first imaging unit;
a second object detection unit that detects the known common real object from the second captured image acquired by the second image acquisition unit;
a second coordinate setting unit that sets the same three-dimensional coordinate space as the three-dimensional coordinate space set by the first image processing device on the basis of the common real object detected by the second object detection unit;
a reception unit that receives the three-dimensional position information from the first image processing device; and
an object processing unit that processes virtual three-dimensional object data to be synthesized with the second captured image by using the three-dimensional position information received by the reception unit.

2. The three-dimensional environment sharing system according to claim 1,
wherein the first image processing device further includes:
a first reference setting unit that calculates a position and a direction of the first imaging unit on the basis of the common real object detected by the first object detection unit;
a first image synthesizing unit that synthesizes a virtual three-dimensional object disposed at a position within the three-dimensional coordinate space corresponding to the three-dimensional position information with the first captured image on the basis of the position and the direction of the first imaging unit and the three-dimensional coordinate space; and
a first display processing unit that displays the synthesized image obtained by the first image synthesizing unit on a first display unit, and
wherein the second image processing device further includes:
a second reference setting unit that calculates a position and a direction of the second imaging unit on the basis of the common real object detected by the second object detection unit;
a second image synthesizing unit that synthesizes a virtual three-dimensional object corresponding to virtual three-dimensional object data processed by the object processing unit with the second captured image on the basis of the position and the direction of the second imaging unit and the three-dimensional coordinate space; and
a second display processing unit that displays the synthesized image obtained by the second image synthesizing unit on a second display unit.

3. The three-dimensional environment sharing system according to claim 1,
wherein the first imaging unit is a three-dimensional sensor,
wherein the first image acquisition unit further acquires depth information corresponding to the first captured image from the first imaging unit along with the first captured image,
wherein the first image processing device further includes:
a first reference setting unit that calculates a position and a direction of the first imaging unit on the basis of the common real object detected by the first object detection unit; and
a position calculation unit that acquires three-dimensional position information of a specific subject included in the first captured image by using the first captured image and the depth information, and converts the acquired three-dimensional position information of the specific subject into three-dimensional position information of the three-dimensional coordinate space on the basis of the position and the direction of the first imaging unit calculated by the first reference setting unit and the three-dimensional coordinate space, and
wherein the second image processing device further includes:
a second reference setting unit that calculates a position and a direction of the second imaging unit on the basis of the common real object detected by the second object detection unit;
a second image synthesizing unit that synthesizes a virtual three-dimensional object corresponding to virtual three-dimensional object data processed by the object processing unit with the second captured image on the basis of the position and the direction of the second imaging unit and the three-dimensional coordinate space; and
a second display processing unit that displays the synthesized image obtained by the second image synthesizing unit on a second display unit.

4. A three-dimensional environment sharing method performed by a first image processing device and a second image processing device, the method comprising:
causing the first image processing device to
acquire a first captured image from a first imaging unit;
detect a known common real object from the acquired first captured image;
set a three-dimensional coordinate space on the basis of the detected common real object; and
transmit three-dimensional position information of the three-dimensional coordinate space to the second image processing device, and
causing the second image processing device to
acquire a second captured image from a second imaging unit which is disposed at a position and in a direction different from a position and a direction of the first imaging unit and of which an imaging region overlaps at least part of an imaging region of the first imaging unit;
detect the known common real object from the second captured image acquired by the second image acquisition unit;
set the same three-dimensional coordinate space as the three-dimensional coordinate space set by the first image processing device on the basis of the detected common real object;
receive the three-dimensional position information from the first image processing device; and
process virtual three-dimensional object data to be synthesized with the second captured image by using the received three-dimensional position information.

5. The three-dimensional environment sharing method according to claim 4, further comprising:
causing the first image processing device to
calculate a position and a direction of the first imaging unit on the basis of the detected common real object;
synthesize a virtual three-dimensional object disposed at a position within the three-dimensional coordinate space corresponding to the three-dimensional position information with the first captured image on the basis of the position and the direction of the first imaging unit and the three-dimensional coordinate space; and
display the synthesized image obtained through the synthesizing on a first display unit, and
causing the second image processing device to
calculate a position and a direction of the second imaging unit on the basis of the detected common real object;
synthesize a virtual three-dimensional object corresponding to the processed virtual three-dimensional object data with the second captured image on the basis of the position and the direction of the second imaging unit and the three-dimensional coordinate space; and
display the synthesized image obtained through the synthesizing on a second display unit.

6. The three-dimensional environment sharing method according to claim 4,
wherein the first imaging unit is a three-dimensional sensor,
wherein the method further includes:
causing the first image processing device to
acquire depth information corresponding to the first captured image from the first imaging unit,
calculate a position and a direction of the first imaging unit on the basis of the detected common real object;
acquire three-dimensional position information of a specific subject included in the first captured image by using the first captured image and the depth information; and
convert the acquired three-dimensional position information of the specific subject into three-dimensional position information of the three-dimensional coordinate space on the basis of the position and the direction of the first imaging unit and the three-dimensional coordinate space, and
causing the second image processing device to
calculate a position and a direction of the second imaging unit on the basis of the detected common real object;
synthesize a virtual three-dimensional object corresponding to the processed virtual three-dimensional object data with the second captured image on the basis of the position and the direction of the second imaging unit and the three-dimensional coordinate space; and
display the synthesized image obtained through the synthesizing on a second display unit.

7. A program causing the first image processing device and the second image processing device to perform the three-dimensional environment sharing method according to any one of claims 4 to 6.
